# FASCICULE DE BREVET EUROPEEN

(11) **EP 0 449 749 B1**
(45) Date de publication et mention de la délivrance du brevet: **01.06.1994**
(21) Numéro de dépôt: 91420082.9
(22) Date de dépôt: 06.03.1991
(51) Int. Cl.: F16K 15/20

(54) **Embout démontable pour valve de pneumatique sur bicyclette, motocyclette ou automobile**
Austauschbarer Reifenventileinsatz für ein Fahrad, Motorrad oder Automobil
Detachable tyre-inflating valve insert for a bicycle, motorcycle or automobile

(30) Priorité: 27.03.1990 FR 9004147
(43) Date de publication de la demande: 02.10.1991
(73) Titulaire: SCHRADER S.A., F-25300 Pontarlier (FR)
(72) Inventeur: Lazzarotto, Franck, F-25300 Pontarlier (FR)
(74) Mandataire: Moinas, Michel

(56) Documents cités:
- EP-A- 0 349 659
- CH-A- 294 211
- FR-A- 532 532
- FR-E- 29 560
- FR-E- 79 196

## Description

La présente invention est relative aux valves pour pneumatiques de bicyclettes, motocyclettes, voire automobiles, et plus particulièrement aux valves en deux parties : une tubulure solidement fixée à la chambre à air ou à la jante et, installé dans cette tubulure, un embout démontable constitué d'un corps contenant un mécanisme de valve. Comparée à une valve identique mono-bloc, une valve en deux parties présente des avantages lors de la fabrication et des éventuelles réparations.

Il existe actuellement, pour le marché des cycles, trois types distincts de mécanisme de valve connus dans la profession sous les noms respectifs de REGINA, PRESTA et WOOD.

Succintement décrit, un mécanisme de type PRESTA comprend une tige portant en son extrémité inférieure un joint d'étanchéité assis dans une cuvette, ce joint venant s'écraser contre un bossage tronconique interne du corps faisant office de siège de clapet lorsque la tige est tirée vers le haut par la rotation d'un écrou autour du filetage de la partie supérieure de la tige, cet écrou prenant par ailleurs appui sur le bord supérieur du corps. Un mécanisme d'anti-rotation constitué d'ailettes de tige latérales prises dans des rainures longitudinales internes du corps empêche l'entraînement par l'écrou de la tige en rotation.

Le mécanisme de type REGINA se différencie du type PRESTA en ce que la tige est moins longue et que son extrémité filetée est tirée, non pas par un écrou, mais par un capuchon taraudé servant également de bouchon. Le mécanisme d'anti-rotation est usuellement constitué d'un doigt solidaire de la cuvette et coulissant dans une fente verticale ménagée dans la partie inférieure du corps.

Le mécanisme de type WOOD comprend un "flotteur" garni d'un joint d'étanchéité, lequel flotteur est soit contenu dans une chambre inférieure soit accroché à l'embouchure inférieure du corps d'embout. La pression interne du pneumatique suffit à maintenir ce flotteur en position fermée avec son joint d'étanchéité plaqué contre le siège de clapet, en l'occurrence soit une restriction interne soit la partie tronconique de l'embouchure inférieure du corps. Une surpression de gonflage force momentanément le flotteur en position ouverte. A l'inverse des deux mécanismes décrits précédemment qui sont munis sur leur corps d'un filetage externe engagé dans un taraudage interne de l'extrémité supérieure de la tubulure, ce mécanisme WOOD est tenu dans la tubulure par un écrou femelle venant s'engager dans un filetage externe de l'extrémité supérieure de la tubulure.

Chacun de ces types de mécanisme pour cycles étant apprécié par une clientèle particulière, les fabricants ainsi que les fournisseurs doivent maintenir en permanence une production et des stocks pour ces trois mécanismes, cette dispersion de moyens limitant fortement les économies d'échelle et augmentant les risques d'invendus. Inversement, on peut aisément comprendre qu'une amélioration de conception, même minime, peut se traduire lors d'une production en grand nombre par des gains de rentabilité notables.

Par exemple, une première amélioration décrite dans EP-A-0 349 659 consiste à ménager à l'extrémité de la tubulure simultanément un taraudage interne et un filetage externe permettant d'installer dans cette même tubulure indifféremment les trois types d'embouts REGINA, PRESTA et WOOD fabriqués à part. Toutefois, cette amélioration reste partielle en ce qu'elle implique une opération supplémentaire sur la pièce produite en le plus grand nombre d'exemplaire, en l'occurrence la tubulure, et n'apporte rien à la fabrication des embouts eux-mêmes.

Le but de la présente invention est une amélioration sensible dans la conception des valves en deux parties pour pneumatique monté sur bicyclette, motocyclette, voire automobile qui, par une standardisation poussée des pièces, facilite la fabrication des divers embouts connus, autorise des économies d'échelle et permet de réduire le nombre de références de pièces à maintenir en stock. Bien évidemment, les contraintes d'étanchéité doivent toujours être respectées, tant au niveau du clapet de retenue qu'entre l'embout et la tubulure.

Ces buts sont réalisés grâce à un embout démontable prévu d'être installé dans la tubulure d'une valve, cet embout étant essentiellement constitué d'un corps tubulaire contenant un mécanisme de valve. Le corps est muni en sa partie supérieure d'un filetage externe de capuchon et en sa partie inférieure d'un joint pour l'étanchéité avec la tubulure. Le mécanisme de valve comprend au moins une tige en la partie inférieure de laquelle est installé un joint de clapet prévu pour s'asseoir contre un siège de clapet sous la forme d'une restriction interne tronconique du corps. Plus particulièrement, le corps présente, en combinaison, un conduit d'entrée dont le diamètre est au moins supérieur à une fois et demie celui de la tige, au moins une rainure longitudinale le long de la partie médiane du conduit interne pour un éventuel moyen d'anti-rotation de la tige ainsi qu'une restriction en son embouchure inférieure retenant, si nécessaire, la tige par le bas. Le corps peut de plus présenter, sous jacente au filetage du capuchon, une collerette suivie d'un second filetage prévu pour être engagé dans un taraudage supérieur de la tubulure. Le corps peut également présenter un ou plusieurs orifices latéraux de forme circulaire ou oblongue sous le siège de clapet interne.

Ainsi conçu, un même corps peut être utilisé lors de la réalisation d'un embout pour cycle dont le mécanisme est du type REGINA, PRESTA ou WOOD, voire d'un type similaire à ceux employés sur les automobiles, et ce avec des modifications mineures et avantageuses des tiges de clapet correspondantes.

De préférence, la partie inférieure de la tige de clapet d'un mécanisme de valve se prolonge au travers de l'orifice central (26) formé par la restriction inférieure du corps, et ce pour confirmer le guidage en coulissement de la tige.

Avantageusement, la tige de clapet d'un mécanisme de valve WOOD s'arrête à l'intérieur de la partie médiane du conduit interne alors que sa partie inférieure se prolonge au travers de la restriction inférieure du corps toujours pour confirmer le guidage en coulissement de la tige. En variante et par analogie avec les mécanismes de valves montés sur automobile, la tige de clapet peut remonter jusqu'au bord supérieur du conduit d'entrée. Un moyen de rappel levant la tige de clapet en position fermée peut alors être logé soit entre la restriction inférieure du corps et la cuvette de joint, soit entre le fond du conduit d'entrée et un épaulement ménagé à l'extrémité supérieure de la tige de clapet.

Avantageusement encore, le corps de l'embout est réalisé par injection de matière plastique ou de zamac sous pression dans un moule.

L'invention est décrite ci-après de façon plus détaillée à l'aide d'exemple d'exécution sans caractère limitatif illustrée aux dessins annexés dans lesquels :
- la figure 1 est une vue en coupe longitudinale du corps de l'embout selon l'invention,
- les figures 2A à 2E sont des vues en coupe longitudinale respectivement des embouts de type REGINA, PRESTA, WOOD et de type automobile, ces embouts étant installés dans l'extrémité supérieure d'une tubulure.

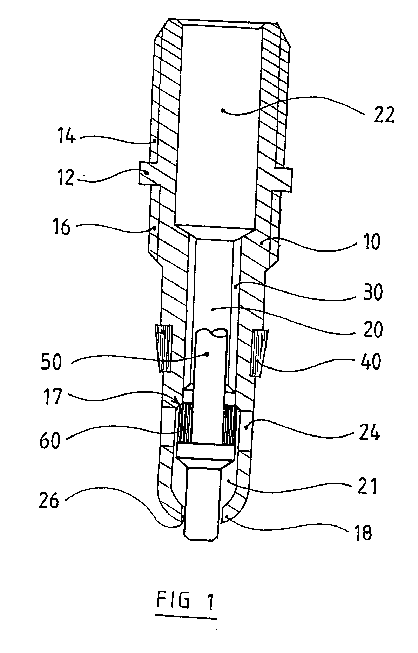

En référence à la figure 1, le corps de l'embout 10 selon l'invention présente une forme générale tubulaire dont on peut différencier sur la face externe trois parties distinctes : une supérieure, médiane et inférieure. La partie supérieure de la face externe est prévue pour recevoir le capuchon de la valve et présente donc un filetage 14 dont le diamètre est en correspondance avec celui de ce capuchon. Séparée de la partie supérieure par une collerette 12, la partie médiane de la face externe du corps 10 correspond à un second filetage 16 dont le diamètre est en relation avec le taraudage de la partie supérieure de la tubulure dans laquelle cet embout est prévu d'être installé. La partie inférieure de la face externe du corps 10 est garnie d'un joint d'étanchéité 40 prévu pour venir s'appuyer contre une restriction tronconique interne de la tubulure lors du vissage de l'embout dans celle-ci. Selon le diamètre final de la valve, donc de la configuration des tubulures actuelles et notamment de la position de leur restriction interne, ce joint 40 peut se situer plus ou moins proche du filetage externe 16. Cette partie inférieure de la face externe du corps 10 présente une diminution de diamètre au-delà de ce joint 40 de telle sorte que l'extrémité inférieure de ce corps 10 puisse passer sans encombre au travers de la restriction de la tubulure. L'embouchure de cette partie inférieure présente de plus une restriction 18 respectant toutefois une ouverture centrale 26. Cette restriction 18 peut par exemple être réalisée par une bouterolle venant arrondir vers l'intérieur les lèvres de cette embouchure.

Le conduit intérieur du corps d'embout 10 présente également trois parties distinctes : un conduit d'entrée large 22 correspondant à la partie supérieure et la première moitié de la partie médiane de la face externe, suivi d'un conduit interne étroit 20 chevauchant la seconde moitié de la partie médiane de la face externe jusqu'à sensiblement la première moitié de la partie inférieure de la face externe, et un dernier conduit de clapet 21 plus large correspondant à la seconde moitié de la partie inférieure de la face externe du corps 10.

La jonction entre le conduit interne 20 et le conduit de clapet 21 est tronconique et constitue le siège de clapet pour un joint 60 monté à l'extrémité inférieure d'une tige de clapet 50 dont la partie supérieure illustrée partiellement remonte dans le conduit interne 20. Comme on peut mieux le voir sur la figure 1, le diamètre interne du conduit de clapet 21 est légèrement supérieur au diamètre extérieur minimum du joint de clapet 60. Pour favoriser le débit d'air à ce niveau, deux orifices latéraux 24 sont ménagés dans la paroi du corps de valve 10 juste sous le siège de clapet 17. Ces orifices latéraux 24 peuvent être ronds ou ovals dans le sens vertical. Ce conduit de clapet 21 est terminé vers le bas par la déformation arrondie 18 formée par une opération de bouterollage, laquelle déformation respecte une ouverture centrale 26 de diamètre égal à environ les deux tiers du diamètre interne du conduit de clapet.

Le conduit interne 20 présente deux rainures opposées 30 utilisées par la suite par des moyens d'anti-rotation de la tige de clapet 50. Le diamètre de ce conduit interne 20 est calculé en fonction du diamètre de la tige de clapet 50 pour respecter un passage annulaire suffisant pour le débit d'air maximum envisagé, passage d'ailleurs complété par les rainures 30 du conduit 20.

Le diamètre du conduit d'entrée 22 est prévu suffisamment large pour permettre l'insertion d'un capuchon de type REGINA venant entourer l'extrémité supérieure filetée de la tige de clapet correspondant ou pour l'installation d'un ressort autour de d'une tige de clapet dans un mécanisme de type automobile. Pour ce, le diamètre intérieur de ce conduit d'entrée 22 doit être au moins supérieur à une fois et demie celui de la tige.

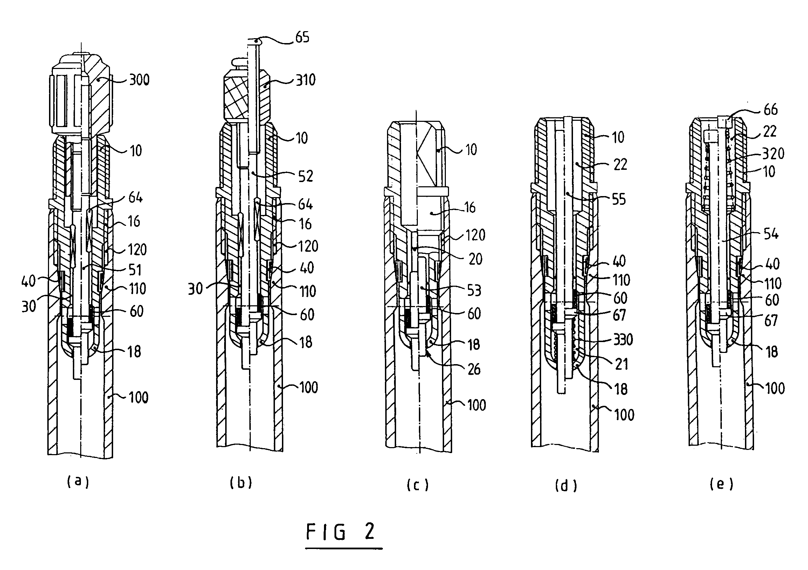

Les figures 2A à 2E illustrent l'emploi de ce même corps 10 décrit précédemment pour la réalisation de cinq types d'embouts différents, respectivement du type REGINA, PRESTA, WOOD et pour automobile. Dans les cinq cas, la relation entre l'embout et la tubulure 100 est identique, c'est-à-dire que l'embout est vissé grâce à son filetage 16 dans le taraudage 120 ce qui comprime le joint 40 contre la restriction 110. Un autre point commun aux trois embouts est le fait que la tige de clapet 50 est prolongée au-delà de la cuvette tenant le joint de telle sorte que ce prolongement traverse l'ouverture centrale 26 de la restriction inférieure 18 ce qui confirme le guidage en coulissement de cette tige de clapet dans le conduit interne 20.

En référence à la figure 2A, l'extrémité filetée de la tige de clapet 51 de mécanisme de type REGINA s'arrête à l'intérieur du conduit d'entrée 22. Alors, le maintien en position fermée de la valve s'effectue de manière connue grâce à un capuchon 300 dont la partie inférieure cylindrique taraudée vient se visser sur l'extrémité filetée de la tige 51 qu'elle tire vers le haut. Les moyens d'anti-rotation de cette tige 51 sont réalisés grâce à une ou plusieurs ailettes longitudinales 64 situées au milieu de cette tige 51, lesquelles ailettes 64 sont engagées dans les rainures 30 du corps de l'embout. Par ailleurs, lorsque le capuchon 300 est retiré et que le pneumatique est dégonflé, cette tige 51 de clapet est retenue vers le bas grâce à la restriction inférieure 18 du corps de l'embout.

En référence à la figure 2B, la tige de clapet 52 est plus longue de telle sorte que son extrémité filetée dépasse hors du conduit d'entrée 22 où il est pris par un écrou 310. Un écrasage 65 ménagé à l'extrémité supérieure de cette tige 52 empêche cet écrou 310 de quitter cette extrémité filetée. De manière conventionnelle pour ce type de mécanisme, les moyens d'anti-rotation de la tige 52 sont réalisés grâce à des ailettes longitudinales 64 engagées dans les rainures 30. On constate que, pour ce mécanisme, la largeur du conduit d'entrée 22 ainsi que la restriction inférieure 18 du corps d'embout 10 ne jouent aucun rôle.

En référence à la figure 2C, le mécanisme de type WOOD se réduit à un flotteur constitué d'une petite tige 53 engagée d'une part à l'entrée du conduit interne 20 et d'autre part dans l'ouverture centrale inférieure 26 de la restriction 18, ce flotteur portant en son milieu le joint d'étanchéité 60. Ce flotteur est maintenu par le bas grâce à la restriction 18 lorsque le pneumatique est dégonflé. Dans cette configuration, la largeur du conduit d'entrée 22 et les rainures 30 ménagées dans le conduit interne 20 ne jouent aucune rôle.

En référence à la figure 2D, la tige de clapet 54 remonte jusqu'au bord supérieur du conduit d'entrée. Un ressort 320 agissant entre le fond du conduit 22 et un écrasage 66 de l'extrémité supérieure de la tige de clapet 54 tire normalement celle-ci en position haute, donc le joint de clapet 60 contre son siège. Si cette configuration met également à profit la largeur du conduit d'entrée 22, ni les rainures longitudinales 30, ni la restriction inférieure 18 ne jouent de rôle.

Le mécanisme de l'embout illustré sur la figure 2E diffère de celui de la figure 2D en ce que le ressort 330 est logé entre la restriction inférieure 18 du corps d'embout 10 et la cuvette 67 du joint de clapet 60, lequel ressort 330 pousse donc vers le haut la tige 55 avec son joint 60 en position fermée. Il peut s'avérer utile de prévoir, pour cette configuration, un conduit de clapet 21 allongé pour l'installation d'un ressort plus long ainsi qu'une fente verticale à l'extrémité inférieure de ce conduit de clapet 21 pour l'arrivée d'un outil comprimant le ressort 330 lors de l'opération de bouterollage. Ni le conduit d'entrée élargi 22, ni les rainures longitudinales 30 n'interviennent dans cette configuration.

La forme particulière de ce corps d'embout 10 peut aisément être réalisée par des procédés d'injection de matière plastique ou autre matière tel que le zamac injectable sous-pression dans un moule. Alors, ce corps d'embout ainsi que les tubulures de valve associés peuvent être fabriqués en très grande série diminuant d'autant les coûts. L'assemblage des différents mécanismes peut présenter avantageusement des séquences similaires, notamment l'insertion préalable de la tige de clapet avant la réalisation de la restriction 18 par bouterollage, ce qui facilite l'organisation du travail. Les utilisateurs peuvent également envisager, outre les tubulures, de s'approvisionner en quantité plus limité de corps d'embout pour monter eux-mêmes au dernier moment et selon la demande tel ou tel autre mécanisme de valve. De nombreuses améliorations peuvent être apportées à cet embout polyvalent selon l'invention.

## Revendications

1. Embout démontable prévu pour être installé dans la tubulure d'une valve de pneumatique pour bicyclette, motocyclette ou automobile essentiellement constitué d'un corps (10) tubulaire contenant un mécanisme de valve, ce corps étant muni en sa partie supérieure d'un filetage (14) externe de capuchon et en sa partie inférieure d'un joint (40) pour l'étanchéité avec la tubulure, le mécanisme de valve comprenant au moins une tige (50) dans la partie inférieure de laquelle est installé un joint de clapet (60) venant s'asseoir contre un siège de clapet (17) interne du corps (10), caractérisé en ce que le corps (10) présente de plus, en combinaison, un conduit d'entrée (22) dont le diamètre est au moins supérieur à une fois et demie celui de la tige (50), au moins une rainure (30) longitudinale le long de la partie médiane du conduit interne (20) pour recevoir un éventuel moyen d'anti-rotation de la tige (50) et une restriction (18) en son embouchure inférieure retenant, si nécessaire, la tige (50) par le bas.

2. Embout selon la revendication 1, caractérisé en ce que le corps (10) présente, sous-jacente au filetage de capuchon (14), une collerette (12) suivie d'un second filetage externe (16) prévu pour être engagé dans un taraudage (120) supérieur de la tubulure (100).

3. Embout selon la revendication 1, caractérisé en ce que le corps (10) présente, sous le siège de clapet interne (17), au moins un orifice latéral (24) de forme circulaire ou oblongue.

4. Embout selon la revendication 1, caractérisé en ce que la partie inférieure de la tige de clapet (52) du mécanisme de valve se prolonge au travers de l'orifice central (26) formé par la restriction inférieure (18) du corps (10), et ce pour confirmer le guidage en coulissement de la tige (52).

5. Embout selon la revendication 1 ou 4, caractérisé en ce que la partie supérieure de la tige de clapet (53) du mécanisme de valve s'arrête à l'intérieur du conduit interne (20).

6. Embout selon la revendication 1 ou 4, caractérisé en ce que la tige de clapet (54) remonte sensiblement jusqu'au bord supérieur du conduit d'entrée (22), et en ce qu'un moyen de rappel (320) logé entre le fond du conduit d'entrée (22) et un écrasage (66) ménagé à l'extrémité supérieure de la tige de clapet (54) lève celle-ci en position fermée.

7. Embout selon la revendication 1 ou 4, caractérisé en ce qu'un moyen de rappel (330) est logé entre la restriction (18) inférieure du corps (10) et la cuvette (67) de joint de clapet (60) poussant ainsi la tige (55) en position fermée.

8. Embout selon la revendication 1, caractérisé en ce que le corps de l'embout est réalisé par injection de matière plastique ou de zamac sous pression dans un moule.

## Patentansprüche

1. Austauschbarer Einsatz, der dafür vorgesehen ist, in den Ventilstutzen eines Reifenventils für ein Fahrrad, Motorrad oder Automobil eingebaut zu werden, und im wesentlichen aus einem röhrenförmigen Körper (10) gebildet ist, der einen Ventilmechanismus enthält, wobei dieser Körper an seinem oberen Teil mit einem Außengewinde (14) für eine Kappe und an seinem unteren Teil mit einer Dichtung (40) zur Abdichtung mit dem Ventilstutzen versehen ist und der Ventilmechanismus mindestens einen Ventilschaft (50) umfaßt, an dessen unterem Teil eine Ventildichtung (60) angebracht ist, die an einem inneren Ventilsitz (17) des Körpers (10) zu liegen kommt, dadurch gekennzeichnet, daß der Körper (10) außerdem in Kombination einen Einlaßkanal (22), dessen Durchmesser mindestens das Eineinhalbfache größer ist als der Durchmesser des Ventilschaftes (50), mindestens eine Längsnut (30) entlang des Mittelteils des inneren Kanals (20), um ein eventuelles Mittel zur Verhinderung einer Drehung des Ventilschaftes (50) aufzunehmen, und an seiner unteren Öffnung eine Verengung (18) aufweist, die, falls erforderlich, den Ventilschaft (50) von unten her festhält.

2. Einsatz nach Anspruch 1, dadurch gekennzeichnet, daß der Körper (10) unterhalb des Gewindes für die Kappe (14) einen Kragen (12) aufweist, auf den ein zweites Außengewinde (16) folgt, das dafür vorgesehen ist, in ein oberes Innengewinde (120) des Ventilstutzens (100) einzugreifen.

3. Einsatz nach Anspruch 1, dadurch gekennzeichnet, daß der Körper (10) unter dem inneren Ventilsitz (17) mindestens eine kreisförmige oder längliche seitliche Öffnung (24) aufweist.

4. Einsatz nach Anspruch 1, dadurch gekennzeichnet, daß der untere Teil des Ventilschaftes (52) des Ventilmechanismus sich durch die von der unteren Verengung (18) des Körpers (10) gebildete zentrale Öffnung (26) hindurch fortsetzt, um die Führung des Ventilschaftes (52) beim Gleiten zu unterstützen.

5. Einsatz nach Anspruch 1 oder 4, dadurch gekennzeichnet, daß der obere Teil des Ventilschaftes (53) des Ventilmechanismus im Inneren des inneren Kanals (20) arretiert wird.

6. Einsatz nach Anspruch 1 oder 4, dadurch gekennzeichnet, daß der Ventilschaft (54) im wesentlichen bis zum oberen Rand des Einlaßkanals (22) steigt und daß ein Rückstellmittel (320), das zwischen dem Boden des Einlaßkanals (22) und einer am oberen Ende des Ventilschaftes (54) vorgesehenen Stauchung (66) angeordnet ist, diesen in die geschlossene Position hebt.

7. Einsatz nach Anspruch 1 oder 4, dadurch gekennzeichnet, daß ein Rückstellmittel (330) zwischen der unteren Verengung (18) des Körpers (10) und dem Teller (67) der Ventildichtung (60) angeordnet ist und so den Ventilschaft (55) in die geschlossene Position drückt.

8. Einsatz nach Anspruch 1, dadurch gekennzeichnet, daß der Körper des Einsatzes durch das Einspritzen von Kunststoff oder Zamak unter Druck in eine Form hergestellt wird.

## Claims

1. A detachable insert for the tubular valve body of a bicycle, motorcycle or automobile tyre, made essentially of a tubular body (10) containing a valve mechanism, which body is provided on its upper part with a cap-engaging outer thread (14) and in its lower part with a joint (40) for sealably engaging with the tubular body, the valve mechanism comprising at least one rod (50) having a lower part installed with a clapper joint (60) which comes to seat against an internal valve seat surface (17) of the body (10), characterized in that the body (10) further comprises, in combination, an inlet duct (22) having a diameter at least one and a half times greater than that of the rod (50), at least one longitudinal groove (30) along the median internal part (29) of the duct to receive an optional means for inhibiting rotation of the rod (50), and a restriction (18) at its lower end which, if necessary, retains the rod (50) from below.

2. Insert according to claim 1, characterized in that the body (10) has, below to the cap-receiving thread (14), a collar (12) followed by a second external thread (16) for engagement in an upper threading (120) of the tubular body (100).

3. Insert according to claim 1, characterized in that the body has, under the internal valve seat surface (17), at least one circular or oblong lateral orifice (24).

4. Insert according to claim 1, characterized in that the lower part (52) of the valve rod of the valve mechanism extends through the central orifice (26) formed by the lower restriction (18) of the body (10), in order to assist guiding of the slidable rod (52).

5. Insert according to claim 1 or 4, characterized in that the upper part (53) of the valve rod of the valve mechanism terminates inside the internal duct (20).

6. Insert according to claim 1 or 4, characterized in that the valve rod (54) extends substantially to the upper end of the inlet duct (22) and in that biasing means (320) housed between the bottom of the inlet duct (22) and a restricted part (66) provided at the upper end (54) of the valve rod urges said rod towards the closed position.

7. Insert according to claim 1 or 4, characterized in that a biasing means (330) is housed between the lower restriction (18) of the body (10) and a recess (67) receiving the valve joint (60), hence urging the rod towards the closed position.

8. Insert according to claim 1, characterized in that the body of the insert is made by injection moulding of plastic material or "zamac".
